# EUROPEAN PATENT SPECIFICATION

(11) **EP 1 008 558 B1**
(45) Date of publication and mention of the grant of the patent: **11.08.2004**
(21) Application number: 98308297.5
(22) Date of filing: 13.10.1998
(51) Int. Cl.: C02F 3/12, C02F 3/34, C02F 11/18

(54) **A method for treating organic waste water**
Methode zur Behandlung organischer Abwässer
Méthode pour le traitement des eaux usées organiques

(43) Date of publication of application: 14.06.2000
(73) Proprietor: KOBELCO ECO-SOLUTIONS CO., LTD., Kobe-shi, Hyogo 651-0072 (JP)
(72) Inventor: Katsura, Kenji, Kobe-shi, Hyogo 655-0016 (JP); Miura, Masahiko, Kobe-shi, Hyogo 655-0016 (JP); Hasegawa, Susumi, Kobe-shi, Hyogo 651-2242 (JP)
(74) Representative: Pett, Christopher Phineas

(56) References cited:
- EP-A- 0 073 747
- US-A- 4 915 840
- US-A- 5 514 277
- US-A- 5 525 228
- DATABASE WPI Section Ch, Week 9910 Derwent Publications Ltd., London, GB; Class D15, AN 99-113948 XP002096647 & JP 10 337593 A (SHINKO PANTEC CO LTD) , 22 December 1998
- ELEFSINIOTIS ET AL: "Effect of HRT on acidogenic digestion of primary sludge" JOURNAL OF ENVIRONMENTAL ENGINEERING, vol. 120, no. 3, 1994, pages 645-660, XP002096643
- PONTI ET AL: "Aerobic thermophilic treatment of sewage sludge at pilot plant scale. 1. Operating conditions" JOURNAL OF BIOTECHNOLOGY, vol. 38, no. 2, 1995, pages 173-182, XP002096644
- EASTMAN ET AL: "Solubilization of particulate organic carbon during the acid phase of anaerobic digestion" JOURNAL WATER POLLUTION CONTROL FEDERATION, vol. 53, no. 3, March 1981, pages 352-366, XP002096645
- SAMBHUNATH ET AL: "Anaerobic acidogenesis of wastewater sludge" JOURNAL WATER POLLUTION CONTROL FEDERATION, vol. 47, no. 1, January 1975, pages 30-45, XP002096646
- PATENT ABSTRACTS OF JAPAN vol. 1997, no. 05 30 May 1997 & JP 09 010 791 A (SHINKO PANTEC CO LTD) 14 January 1997
- PATENT ABSTRACTS OF JAPAN vol. 1997, no. 08 29 August 1997 & JP 09 099 298 A (SHINKO PANTEC CO LTD) 15 April 1997

## Description

The present invention relates to a method for continuously treating waste water. More particularly it relates to a method for biologically treating organic waste water containing organic solids, for example, waste sludge containing raw sludge and biological sludge which are discharged in sewage treatment processes such as sewage treatment plants, night soil treatment plants or the like, and/or organic solids discharged from food factories, chemical factories and the like.

Conventionally, the following method has widely been employed as a general method for treating such organic waste water. First, organic components of organic sludge are biologically digested by aerobic or anaerobic microorganism decomposition using methods such as aerobic digestion, anaerobic methane fermentation and the like, so that organic matter is decomposed into gaseous components such as carbon dioxide, methane gas and the like. After that, the sludge containing mainly microorganism biomass generated by the biological digestion and untreated residual solids is solid-liquid separated by means of a precipitation vessel, etc. While the treated water obtained as supernatant is suitably processed, the excess sludge is usually disposed of by dumping at sea or on land. However, if such excess sludge is disposed of by dumping at sea, environmental destruction is caused. Therefore, dumping at sea has been virtually prohibited because global environmental protection has recently been advocated. Furthermore, it has become harder, year after year, to find disposal areas where excess sludge can be dumped.

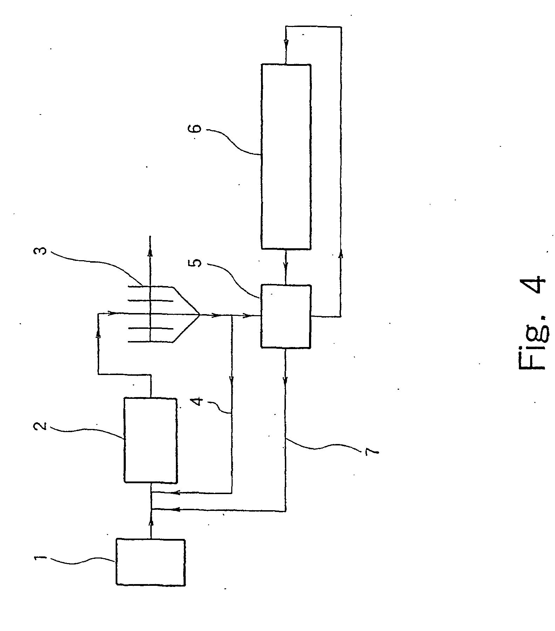

As an invention related to an activated sludge treatment method and apparatus capable of considerably reducing the amount of excess sludge generated at a treating step, the present applicant has reported an activated sludge treatment method and apparatus characterized in that, as shown in Fig. 4, organic waste water sent from an organic waste water reservoir 1 is subjected to aerobic biological treatment in an aeration tank 2, the treated waste water is then solid-liquid separated into treated water and sludge by a precipitation device 3, part of the sludge separated by the precipitation device 3 is returned to the aeration tank 2 through a recycle route 4, excess sludge separated by the precipitation device 3 is heat exchanged by a heat exchanger 5 and is then solubilized by a solubilizing treatment device 6, and a treated solution obtained by the solubilization performed by the solubilizing treatment device 6 is returned to the aeration tank 2 through a return route 7 (Published Japanese Patent Application No. Hei 9-10791). An embodiment of that invention has indicated that about 50 % of a solid is solubilized and about 50 % of volatile matter is removed if the treatment is performed with a residence time of the excess sludge set to 5 days. However, if the excess sludge should fully be solubilized based on that invention, the treatment is redundantly performed at a high temperature. Accordingly, a large amount of the excess sludge must be treated for a long time by means of the solubilizing treatment device including a large capacity vessel. Consequently, the scale of required equipment is enlarged, resulting in an increase in running and maintenance costs and the like for heating. Thus, there have been disadvantages to industrially perform that invention.

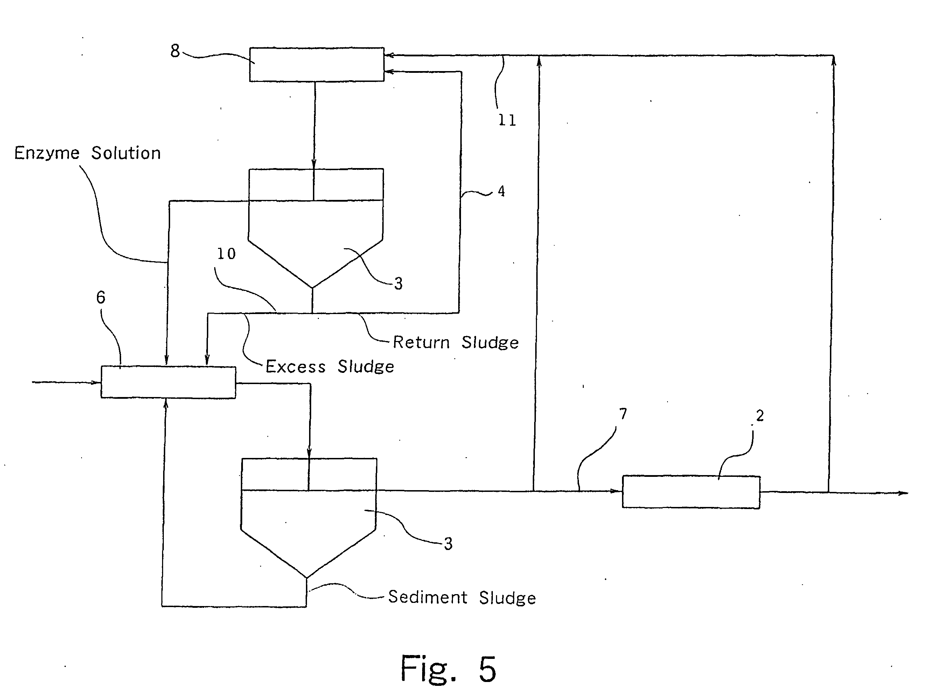

Furthermore, the present applicant has also reported, in Published Japanese Patent Application No. Hei 9-99298, a sludge digesting treatment method comprising a step of producing enzymes capable of solubilizing sludge and an apparatus for the same (see Fig. 5). The apparatus shown in Fig. 5 has an enzyme production vessel 8 and a solubilizing treatment device 6. Enzyme capable of solubilizing sludge is produced in the enzyme production vessel 8. Sludge is solubilized by enzyme in the solubilizing treatment device 6. The digesting treatment of sludge is performed in the aeration tank 2. The numbered features 2, 3, 4, 6 and 7 of Fig. 5 are identical to those of Fig. 4. The reference numerals 10 and 11 denote a sludge transfer route and a supernatant return route, respectively. The enzyme producing step is performed by incubating a microorganism obtained from a sludge or another separate source under proper conditions, and the enzyme produced and secreted by the incubation is used to promote solubilization of the sludge in a solubilizing vessel, thereby reducing the amount of an excess sludge. Although the specification of that application discloses preferred conditions such as temperature, pH, time and the like under which the solubilizing reaction is conducted, it is apparent that such conditions are appropriately selected depending on the concentration of sludge to be treated, the composition and physical properties of organic matter or the like, and the enzymic properties of the secreted enzyme. The selection criteria have not been established particularly. According to that method, it is expected that the solubilization efficiency in the solubilizing vessel can be increased. However, since the steps of producing and digesting the enzyme are essential, the entire operation is relatively complicated, which often results in an increased size of the equipment.

In consideration of the foregoing problems of the prior art, there is still a need to provide a method capable of simplifying the process, specifying and thereby shortening solubilizing reaction time, and performing a sufficient solubilization efficiently.

In order to overcome the problems set out above, the present invention provides a method according to claim 1.

The invention also provides a method for treating organic waste water as described above, wherein the production and secretion amounts and/or the activity of the sludge solubilization enzyme in the solubilizing treatment device is monitored, and the solubilizing treatment time is selected based on the hydraulic residence time of a treated solution.

The solubilizing treatment time is selected that is ± 10 hours, preferably ± 5 hours and particularly preferably ± 2 hours of the hydraulic residence time of a treated solution at which the production and secretion and/or activity of the enzyme is a maximum.

The activity of the sludge solubilization enzyme is preferably monitored by determining its protease activity. This may be done by any suitable means, many of which are known in the art.

According to the present invention, the solubilization is continuously performed under conditions such that enzyme production and solubilization can both be performed. Consequently, the process can be simplified. In addition, since the treatment time is determined based on an HRT, redundant solubilizing reaction can be avoided. Thus, the volume of the solubilizing vessel can be reduced and the solubilizing treatment can be performed well.
Figure 1 is a graph representing the effect of protease production by a Bacillus on an HRT at a solubilizing step according to a method of the present invention;
Figure 2 is a graph representing the effect of protease production by excess sludge on the HRT at the solubilizing step according to the method of the present invention;
Figure 3 is a graph representing the effect of a solubilization ratio of the excess sludge on the HRT at the solubilizing step according to the method of the present invention;
Figure 4 is a schematic view showing a structure of an organic waste water treatment device according to the prior art; and
Figure 5 is a schematic view showing a structure of another organic waste water treatment device according to the prior art.

An embodiment of the present invention will be described below.

The present invention provides a method for continuously treating organic waste water, the method comprising the steps of (1) aerobically treating the organic waste water in an aeration tank, (2) solid-liquid separating the obtained treated solution in a precipitation device to obtain treated water and sludge, (3) returning part of the sludge to the aeration tank used at the step (1) and solubilizing excess sludge derived from the sludge by a solubilizing treatment device, and (4) returning the treated solution to the aeration tank used at the step (1) after being solubilized, wherein the solubilizing treatment at the step (3) is carried out by heat and under conditions such that a sludge solubilization enzyme is produced and secreted from a microorganism contained in the excess sludge or a microorganism derived from another separate source to promote the solubilization thereby, and the solubilizing treatment time is determined based on an HRT of the treated solution in the solubilizing treatment device.

The aeration tank, the precipitation device, the solubilizing treatment device and a return route to be used at the steps (1) to (4) are not specifically restricted, but known devices can also be utilized. The conditions and the like at the steps (1) and (2) may be set in conformity with well-known aerobic treatment and solid-liquid separation methods according to the prior art (see the specification of Published Japanese Patent Application No. Hei 9-10791).

More specifically, the following represents some of the preferred parameters for carrying out the solubilization by heat and under conditions such that the sludge solubilization enzyme is produced and secreted from a microorganism to promote solubilization thereby at the step (3).
1. Temperature : 50 to 80°C, preferably 60 to 70°C;
2. Concentration of sludge : 1000 mg/liter or more, preferably 5000mg/liter or more;
3. pH : 7 to 9, preferably 7.5 to 8.5;
4. Environment : aerobic or microaerobic conditions; and
5. Time : determined based on the HRT in the solubilizing vessel for the excess sludge, and which can be optimised.

In a case where the excess sludge is thus solubilized continuously, the HRT is obtained based on the amount of inflow and an effective volume of a reactor. In other words, the HRT can be calculated based on an equation of: HRT (hydraulic residence time) = VA / Q ( VA : the volume of the reaction vessel (m³), Q : the amount of the inflow (m³/hour)).

If the solubilization can be achieved to a desired extent, it is apparent that the volume of the reactor can be reduced as the HRT is shortened. In consideration of a reduced size of the equipment intended for the present invention, the optimal solubilization time is determined based on the HRT so that redundant solubilizing treatment can be avoided.

It is preferable that the production and secretion amounts and/or activity of the sludge solubilization enzyme at the step (3) should be monitored to select the HRT based on an HRT at which the production and secretion amounts and/or activity are maximum. If the HRT is thus set, reaction performed by the produced and secreted sludge solubilization enzyme can efficiently be utilized.

Furthermore, it is preferable that the HRT should be set to 3 to 24 hours to perform the solubilizing treatment.

### Examples

While the examples of the present invention will be described below, the scope of the present invention is not restricted thereto.

### Example 1 : Effect of enzyme production by microorganism on residence times.

A yeast - peptone medium (manufactured by DIFCO Co., Ltd. (4 gram of yeast extract, 8 gram of peptone and 1 liter of water, pH 6.8) was placed in a reactor made of glass, and Bacillus stearothermophilus SPT 2-1 [FERM P-15395] derived from a sludge which had been preincubated was inoculated and was incubated with shaking at a temperature of 65°C. An HRT was set to 36 hours firstly while an incubation solution was continuously supplied. In order to shorten the HRT to a predetermined time, while the amount of an organic matter to be placed was kept constant, an appropriate amount of dilution water was added to perform the incubation. A supernatant solution was sampled at residence time, and protease activity was measured as follows. More specifically, an equal amount of sample was added to 0.7 ml of a solution (5 mg/ml) which was obtained by suspending azocoal (trade name, manufactured by Sigma Co., Ltd.) acting as a substrate for a non-specific protease assay into a phosphoric acid buffer solution of pH 7.0. The mixture was incubated for 30 minutes at a temperature of 70°C. After the reaction was completed, the absorbancy at 520 nm was measured. When the measurement was similarly performed by using, as a sample, 30 µg/ml of the phosphoric acid buffer solution (pH 7.0) of trypsin (about 400 BAEE U/mg, manufactured by Wako Junyaku Co., Ltd.), an absorbancy of 1.0 was obtained at 520 nm.

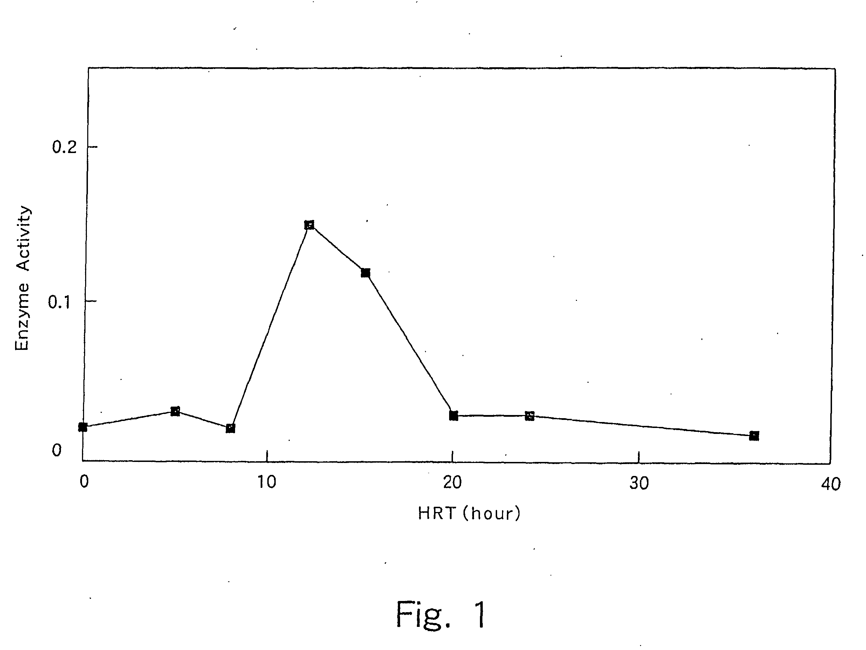

The obtained result is shown in Fig. 1. It was found under those circumstances that the enzyme activity reached a peak at an HRT of 12 hours and was reduced to a lower level before the HRT reaches 20 hours. Accordingly, it is apparent that the HRT suitable for the enzyme production by said strain is about 12 hours.

### Example 2 : Effect of enzyme production by an excess sludge on residence time

Excess sludge derived from a sewage treatment plant which had an organic solid (vss: volatile suspended solids) concentration of 3 % by weight was placed in a jar fermenter made of glass which had an effective volume of 5 liters, and was treated at a temperature of 65°C, an airflow quantity of 0.3 vvm (volume/volume/minute) and a stirring speed of 300 rpm (revolutions per minute). In the same manner as in Example 1, an HRT was first set to 36 hours, dilution water was appropriately injected to set a predetermined HRT and the protease activity at each HRT was measured. The abbreviation of "vvm" denotes volume of air/volume of reactor/minute.

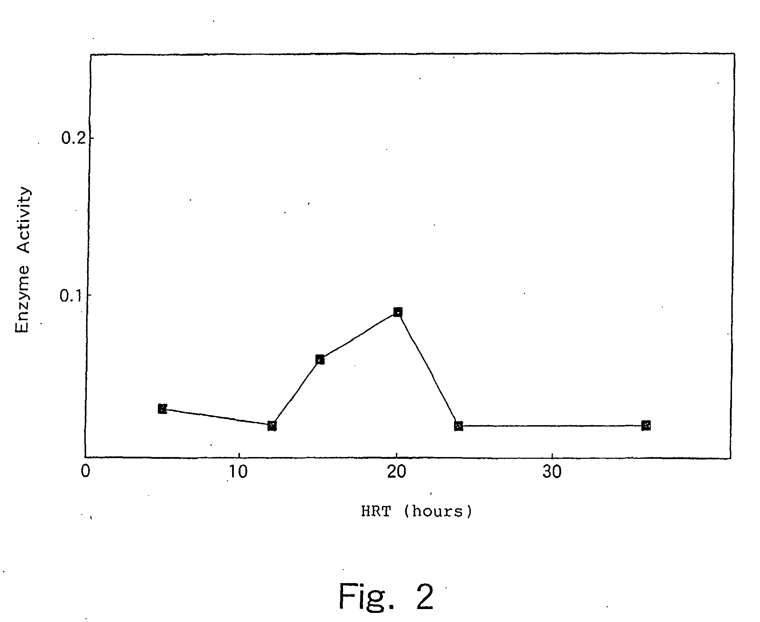

The obtained result is shown in Fig. 2. It was found that the enzyme activity reached a peak at an HRT of 15 to 20 hours and was reduced to a lower level before an HRT of 25 hours. Accordingly, it is apparent that the HRT suitable for the enzyme production under these circumstances is about 20 hours.

### Example 3 : Effect of solubilization ratio of excess sludge on residence time

Excess sludge was treated in the same manner as in Example 2, a solubilization sample was taken at each HRT to measure the organic solid (vss) content, and the solubilization ratio (%) at each time was calculated based on the vss content obtained before the treatment. The vss content was measured according to JIS-K-0102.

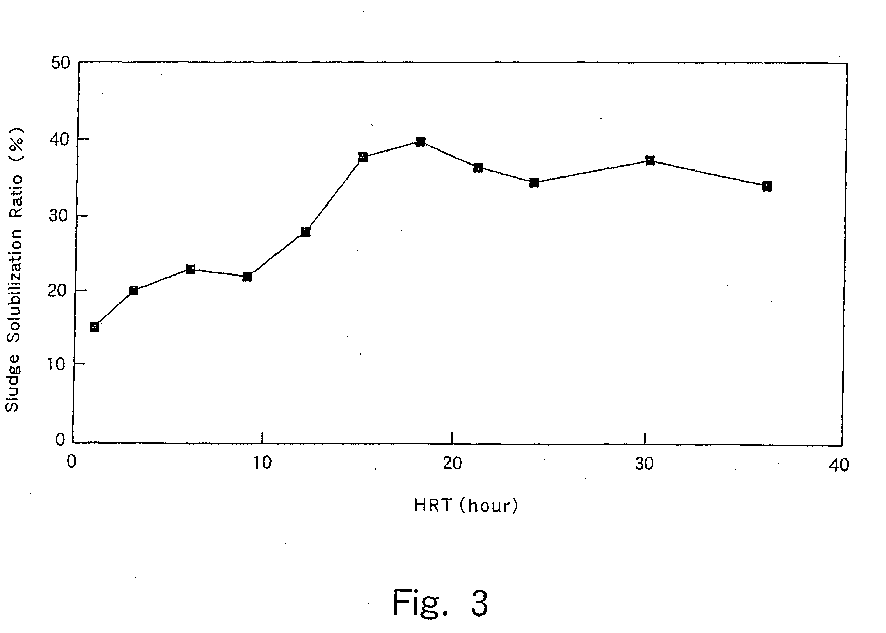

The obtained result is shown in Fig. 3. It is apparent from Fig. 3 that the solubilization ratio is maximum at an HRT of about 15 to 20 hours, and a solubilization peak, which seems to be caused by heating, can be detected at an HRT of 3 to 9 hours.

From the results of Examples 2 and 3, the following was revealed. More specifically, in a case where 3 % by weight of the excess sludge derived from the sewage treatment plant is to be solubilized under conditions suitable for the enzyme production, it is preferable that protease activity should be monitored to select an HRT based on the HRT at which the protease activity reaches a peak. In this case, it is obvious that the solubilization can efficiently be performed at an HRT of 3 to 24 hours.

Using the solubilizing step of the method for continuously treating organic waste water containing organic solids according to the present invention, the solubilization can be performed under conditions that both enzyme production and the solubilization can be carried out. Consequently, the process can be simplified. In addition, since the treatment time is determined based on the HRT, redundant solubilizing reaction can be avoided. Therefore, the volume of the solubilizing vessel can be reduced, and the solubilizing treatment can be performed well.

## Claims

1. A method for continuously treating organic waste water comprising organic solids, wherein organic solids derived from excess sludge obtained following solid-liquid separation of aerobically-treated organic waste water are continuously solubilized in a solubilizing treatment device at a temperature of from 50 to 80°C and a concentration of excess sludge of 5000 mg/litre or more and under aerobic or micro-aerobic conditions such that a sludge solubilization enzyme is produced and secreted from a micro-organism to promote the solubilization and the production and secretion amounts and/or activity of the sludge-solubilizing enzyme are monitored to select an HRT within 3 to 24 hours based on the HRT at which the production and secretion amounts and/or activity are at a maximum."

2. A method for treating organic waste water as claimed in any one of the preceding claims, wherein the pH is between 7 and 9.

## Patentansprüche

1. Verfahren zur kontinuierlichen Behandlung organischer Abwässer enthaltend organische Feststoffe, bei dem man organische Feststoffe, die aus überschüssigem Klärschlamm herstammen, welcher nach einer Fest-Flüssig-Trennung von organischem Abwasser nach aerober Behandlung erhalten wird, in einer Vorrichtung zur Solubilisierungsbehandlung bei einer Temperatur von 50 bis 80 °C und einer Konzentration von Überschuss-Klärschlamm von wenigstens 5000 mg/l unter aeroben oder mikroaeroben Bedingungen in einer Wiese solubilisiert, dass ein den Klärschlamm solubilisierendes Enzym von Mikroorganismen zur Förderung der Solubilisierung produziert und abgesondert wird, wobei die produzierten und abgeschiedenen Mengen und/oder Aktivität des den Klärschlamm solubilisierenden Enzyms überwacht werden, um eine HRT im Bereich von 3 bis 24 Stunden auszuwählen, basierend auf der HRT, bei welcher die produzierten und abgeschiedenen Mengen und/oder Aktivität ein Maximum aufweisen.

2. Verfahren zur Behandlung von organischem Abwasser nach Anspruch 1, wobei der pH im Bereich von 7 bis 9 liegt.

## Revendications

1. Procédé de traitement continu d'eaux usées organiques comprenant des solides organiques, dans lequel les solides organiques dérivés de boues en excès obtenues suite à la séparation solide-liquide d'eaux usées organiques traitées de manière aérobie sont continuellement solubilisés dans un dispositif de traitement par solubilisation à une température allant de 50 à 80°C et à une concentration des boues en excès de 5 000 mg/litre ou plus et dans des conditions aérobies ou micro-aérobies telles qu'une enzyme de solubilisation des boues est produite et sécrétée à partir d'un micro-organisme pour stimuler la solubilisation et les quantités de production et de sécrétion et/ou l'activité de l'enzyme de solubilisation des boues sont surveillées afin de choisir un temps de rétention du liquide situé entre 3 à 24 heures sur la base du temps de rétention du liquide pendant lequel les quantités de production et de sécrétion et/ou l'activité se situent à leur maximum.

2. Procédé de traitement d'eaux usées organiques tel que revendiqué dans la revendication 1, dans lequel le pH se situe entre 7 et 9.
